# EUROPÄISCHE PATENTSCHRIFT

(11) **EP 2 453 719 B1**
(45) Veröffentlichungstag und Bekanntmachung des Hinweises auf die Patenterteilung: **04.11.2020**
(21) Anmeldenummer: 11188708.9
(22) Anmeldetag: 10.11.2011
(51) Int. Cl.: H05B 47/18, H05B 45/00, H02J 9/02

(54) **Notbeleuchtungsanlage und ein Verfahren zur Initialisierung einer Notbeleuchtungsanlage**
Emergency lighting system and a method for initialising the same
Installation d'éclairage d'urgence et procédé d'initialisation d'une installation d'éclairage d'urgence

(30) Priorität: 10.11.2010 AT 18502010
(43) Veröffentlichungstag der Anmeldung: 16.05.2012
(73) Patentinhaber: DIN-Dietmar Nocker Facilitymanagement GmbH, 4030 Linz (AT)
(72) Erfinder: Nocker, Dietmar, 4531 Kematen an der Krems (AT)
(74) Vertreter: Jell, Friedrich

(56) Entgegenhaltungen:
- EP-A1- 1 513 376
- EP-A2- 0 949 741
- EP-A2- 1 480 495
- WO-A1-2009/027129
- WO-A2-2011/067367
- DE-A1- 19 832 550
- DE-A1-102005 028 206
- DE-A1-102008 053 487
- US-A1- 2006 197 474
- US-A1- 2010 241 255
- KONZE A ET AL: "SYSTEMTECHNIK FUER DIE SICHERHEITSBELEUCHTUNG IN EISENBAHNTUNNELN DER DEUTSCHEN BAHN AG - SYSTEM EQUIPMENT FOR EMERGENCY LIGHTING IN RAILWAY TUNNELS OF DEUTSCHE BAHN AG", ZEVRAIL - GLASERS ANNALEN, GEORG SIEMENS VERLAG, BERLIN, DE, Bd. 132, Nr. 6-7, 1. Juni 2008 (2008-06-01), Seiten 250-255, XP001513502, ISSN: 1618-8330

## Beschreibung

Die Erfindung betrifft eine Notbeleuchtungsanlage und ein Verfahren zur Initialisierung einer Notbeleuchtungsanlage mit wenigstens einer Notbeleuchtungszentrale und mit mindestens zwei mit der Notbeleuchtungszentrale über eine Datenverbindung verbundenen Leuchten, insbesondere Not- und/oder Sicherheitsleuchten, die Leuchtmittel zum Beleuchten von Kennzeichen, Flucht- und/oder Rettungswegen aufweisen, bei welchem Verfahren zur Datenübertragung über die Datenverbindung Adressdaten der Leuchten verwendet werden und die Leuchten Blinkmuster in Abhängigkeit der jeweiligen Adressdaten der Leuchten abgeben, welche Blinkmuster sich in Abhängigkeit der jeweiligen Adressdaten der Leuchten voneinander unterscheiden.

Zur Initialisierung einer Notbeleuchtungsanlage mit Leuchten, wie beispielsweise Sicherheitsleuchten, Rettungszeichen-Leuchten und Leuchten für eine Ersatzbeleuchtung, ist es bekannt, die Adressdaten der Leuchten aufzuschreiben und diese aufgeschriebenen Adressdaten in einer Notbeleuchtungszentrale der Notbeleuchtungsanlage einzugeben. Diese Adressdaten, können den Leuchten werkseitig zugeordnet sein und dienen unter anderem dafür, die Leuchten über die Datenverbindung adressierbar beziehungsweise ansteuerbar zu machen. Ein Aufschreiben von Adressdaten, die häufig in Form eines Codes, meist als HEX Code, an der Leuchte selbst angebracht werden, erfordert jedoch nachteilig einen erheblichen Initialisierungsaufwand. Außerdem treten bei diesem Schritt häufig Fehler auf, wodurch solch eine Initialisierung meist einen erheblichen Überprüfungsaufwand erfordert und damit eine vergleichsweise schnelle Inbetriebnahme der Anlage nicht ermöglicht. Hinzu kommt, dass selbst nach einer Adressdateneingabe eine weitere Überprüfung der Leuchten zu erfolgen hat, um die Funktionalität der Anlage zu überprüfen. Bekannte Verfahren zur Initialisierung einer Notbeleuchtungsanlage sind daher nicht nur kompliziert und aufwendig, sondern auch fehleranfällig und langwierig in ihrer Durchführung. Weiter ist es bekannt, zu den Anordnungsorten der Leuchten in der Notbeleuchtungsanlage auch Ortsdaten abzuspeichern, um bei Fehlermeldungen an der Notbeleuchtungszentrale schnell die fehlergebende Leuchte örtlich auffinden zu können. Derartige Ortsdaten der Leuchten werden meist gemeinsam mit den Adressdaten erfasst und aufgeschrieben und gemeinsam bei der Notbeleuchtungszentrale eingegeben. Eine Verfahrenserleichterung für ihre Initialisierung kann dadurch nicht ermöglicht werden.

Aus der WO2006/136236A1 bzw. DE102005028206A1 sind Leuchten einer Notbeleuchtungsanlage bekannt, die neben einem Leuchtmittel zur Beleuchtung auch über LED verfügen, die für Überprüfungszwecke der Leuchten eingesetzt werden. So kann über diese LED beispielsweise ein Blinkmuster abgegeben werden, um dem Bedienpersonal die Adressdaten der an eine Datenverbindung angeschlossenen Leuchte anzuzeigen. Ein Blinkmuster zur Adressenabgabe der Leuchte ist zwar bedienungsfreundlich vom Bedienpersonal aufzunehmen, eine Initialisierung einer Notbeleuchtungsanlage bedarf jedoch unter anderem auch einer Überprüfung der anderen Leuchtmittel der Leuchte, sodass damit der Bedienungsaufwand nicht vermindert werden kann.

Außerdem ist es aus der WO2007/095740A1 bekannt, dem Licht einer Leuchte, das zur Beleuchtung abgegeben wird, ein für ein Bedienpersonal unsichtbare optische Information aufzumodulieren, um damit die Adresse der Leuchte einem optischen Empfangsgerät, das das Bedienpersonal mitführt, zu übermitteln. Auch dieses Verfahren kann die Überprüfung der Funktion der Leuchten bzw. damit auch die Initialisierung von Beleuchtungsanlagen nicht vereinfachen bzw. beschleunigen.

Ein Stand der Technik nach dem Oberbegriff des Anspruchs 1 ist aus der US2006/197474A1 oder DE19832550A1 bekannt.

Die Erfindung hat sich daher die Aufgabe gestellt, ausgehend vom eingangs geschilderten Stand der Technik ein Verfahren zur Initialisierung einer Notbeleuchtungsanlage derart zu verbessern, dass deren Initialisierung bedienungsfreundlich und schnell ermöglicht werden kann. Außerdem soll diese Initialisierung eine hohe Bedienungssicherheit durch geringe Fehleranfälligkeit aufweisen.

Die Erfindung löst die gestellte Aufgabe dadurch, durch die Merkmale des Anspruchs 1.

Fragt die Notbeleuchtungszentrale über die Datenverbindung die Adressdaten der Leuchten ab, so kann es zunächst für das Bedienpersonal einfacher werden, die Initialisierung der Notbeleuchtungsanlage vorzunehmen, weil dadurch ein Abschreiben von Adressdaten der Leuchten unterbleiben kann. Somit kann insbesondere auch die Fehlergefahr verringert und die Bedienungssicherheit des Verfahrens deutlich verbessern kann. Ein derartiges Suchen der Adressdaten kann durchaus automatisiert von der Notbeleuchtungszentrale durchgeführt werden - verschiedenste Suchverfahren sind hierfür bekannt -, beispielsweise indem die vergebenen Adressen bzw. Adressdaten mit einer Abfrage jeder Adresse im zur Verfügung stehenden Adressraum gesucht bzw. dadurch gefunden werden. Gerade bei einer als Sicherheitsbeleuchtung ausgeführten Notbeleuchtung ist der Adressraum für maximal 20 Leuchten pro Datenverbindung vergleichsweise klein, so dass solch eine Suche bzw. Abfrage zeitschnell durchführbar sein kann. Diese Erleichterung der Bedienung ist jedoch besonders zielführend, wenn die Notbeleuchtungszentrale in einem weiteren Schritt die zum Beleuchten von Kennzeichen, Flucht- und/oder Rettungswegen vorgesehenen Leuchtmittel, insbesondere Leuchtdioden, der Leuchten über die Datenverbindung zur Abgabe von Blinkmustern ansteuert. Damit kann nämlich die Zeit zur Initialisierung der Notbeleuchtungsanlage vergleichsweise deutlich verkürzt werden, indem nämlich bei der Überprüfung des Blinkmusters von vorzugsweise allen Leuchtmitteln auch gleichzeitig die Parameter dieser Leuchtmittel mitüberprüft werden können. Dies kann weiter auch die Überprüfung der Funktionalität der Notbeleuchtungsanlage erleichtern. Ist nämlich ein Blinkmuster an der Leuchte zu erkennen, so bedeutet dies im Umkehrschluss, dass sowohl Verbindungsfehler über die Datenverbindung, Funktionsfehler der Leuchte selbst bzw. in weiterer Folge auch Funktionsfehler an der Notbeleuchtungszentrale ausgeschlossen werden können, weil ja die Notbeleuchtungszentrale über die Datenverbindung die Adressdaten der Leuchten abfragen konnte. Mit einem Überprüfungsschritt können daher eine Vielzahl an Tests zur Funktion der Notbeleuchtungsablage sowie zur Wirkungsweise der Leuchtmittel zur Beleuchtung vorgenommen werden. Die Notbeleuchtungsanlage kann daher vergleichsweise einfach vom Bedienpersonal optisch auf Funktionstüchtigkeit überprüft werden, sodass das Verfahren zur Initialisierung nicht nur einfach handhabbar, sondern auch schnell durchgeführt werden kann. Es kann daher sichergestellt werden, dass alle Leuchtmittel auch wenigstens bei Störung der Stromversorgung der allgemeinen künstlichen Beleuchtung ihre Notfunktion erfüllen können. Außerdem kann mit einem durch das Bedienpersonal optisch erkennbaren Blinken (Ein- und Ausschalten) der Leuchtmittel der Leuchte deren vergleichsweise gute Sichtbarkeit genutzt werden, was das Initialisierungsverfahren noch weiter vereinfachen und damit auch bedienungsfreundlicher machen kann. Als besonders vorteilhaft haben sich für die Erzeugung eines vergleichsweise eindeutigen und gut erkennbaren Blinkmusters insbesondere Leuchtdioden als Leuchtmittel herausgestellt. Die Verwendung von zum Beleuchten von Kennzeichen, Flucht-und/oder Rettungswegen vorgesehenen Leuchtmittel zur Blinkmusterabgabe kann das Verfahren auch sicher machen, weil durch deren Helligkeit fehlende Unterschiede, beispielsweise aufgrund doppelter Adressen, umgehend auffallen können. Gegenüber den aus dem Stand der Technik bekannten Initialisierungsverfahren kann die Inbetriebnahme der Notbeleuchtungsanlage deutlich bedienungsschneller, bedienungsfreundlicher und auch sicherer durchgeführt werden.

Im Allgemeinen wird noch erwähnt, dass unter Leuchte eine Sicherheitsleuchte, eine Rettungszeichen-Leuchte und/oder eine Leuchte für eine Ersatzbeleuchtung verstanden werden kann. Auch schließt eine Notbeleuchtungsanlage eine Notbeleuchtung für Zwecke der Sicherheitsbeleuchtung und/oder für Zwecke der Ersatzbeleuchtung ein. Auch ist vorstellbar, dass die Notbeleuchtungsanlage als Beleuchtungsanlage für eine Innenbeleuchtung verwendet wird.

Außerdem kann das Blinkmuster zur Vereinfachung der Initialisierung der Notbeleuchtungsanlage noch weiter genutzt werden, indem jedem Blinkmuster Ortsdaten zum Anordnungsort der jeweiligen Leuchte zugeordnet werden. Im Zuge der Überprüfung der Leuchten können diesen nämlich anhand des vergleichsweise einfach zu erfassenden Blinkmusters auch manuell Ortsdaten zugeordnet werden. Das Bedienpersonal kann daher die Initialisierung mit einer Überprüfung der Anlage und einem abschließenden Eingabeschritt, bei dem in Abhängigkeit des Blinkmusters die in der Notbeleuchtungszentrale abgespeicherten und Adressdaten aufweisenden Datenpakete mit den jeweiligen Ortsdaten ergänzt werden, beenden. Das erfindungsgemäße Verfahren weist daher nicht nur einen verhältnismäßig hohen Bedienungskomfort auf, sondern kann auch vergleichsweise schnell durchgeführt werden, was zu einem kostengünstigen Verfahren durch verminderten Arbeitsaufwand führen kann.

Weist die Notbeleuchtungszentrale den Leuchten neue Adressdaten zu, wobei die Leuchten in Abhängigkeit der Wertigkeit ihrer neuen Adressdaten das Blinkmuster erzeugen, dann kann sich die Möglichkeit eröffnen, den Steuerungsaufwand beim Initialisierungsverfahren noch weiter zu verringern. Die Notbeleuchtungszentrale kann nämlich den bestehenden Adressspeicher der Leuchten nutzen und diesen auf einfache Weise Kenndaten zu deren Blinkmuster mitzuteilen. Der Datentransfer zur Blinkmusterabgabe mit den Leuchten kann damit auch gering gehalten werden, was durch eine verminderte Datentransferrate die Standfestigkeit des Initialisierungsverfahrens gegenüber Störeinflüssen erhöhen kann. Außerdem kann mit einer Blinkmusterabgabe bei der Initialisierung der Notbeleuchtungsanlage die Adressenvergabe der Notbeleuchtungszentrale auf einfache Weise mitüberprüft werden, wodurch der Verfahrensaufwand noch weiter vermindert werden kann.

Um auf einfache Weise eine Synchronisation der Blinkmuster zu schaffen, kann vorgesehen sein, dass die Notbeleuchtungszentrale über die Datenverbindungen den Leuchten ein Taktsignal zu Abgabe deren Blinkmuster vorgibt. Dies führt insbesondere dann zu einer Verfahrenserleichterung für das Bedienpersonal, wenn Blinkmuster von nahe nebeneinander angeordneten Leuchten überprüft werden müssen. Unter anderem kann damit auch auf einfache Weise vermieden werden, dass Leuchtmittel anderer Leuchten unerwünschte Beleuchtungseffekte auf das Blinkmuster einer zu überprüfenden Leuchte ausüben können. Das erfindungsgemäße Verfahren zur Initialisierung einer Notbeleuchtungsanlage kann daher besonders fehlerfrei durchführbar werden.

Sind wenigstens zwei parallele Datenverbindungen für Leuchten vorgesehen, wobei die an einer gemeinsamen Datenverbindung angeschossenen Leuchten teilweise ein gleiches Blinkmuster abgeben, so kann auf einfache Weise der Datenstrang erkannt werden, an dem die jeweilige Leuchte angeschlossen ist. Das Bedienpersonal kann nämlich anhand der übereinstimmenden Blinkmuster eine Zuordnung der Leuchten zu gemeinsamen Datenverbindungen vornehmen bzw. damit auch diese Zuordnungen überprüfen. Unter anderem kann dadurch auch das Verfahren zur Initialisierung weiter vereinfacht werden.

Ist die Notbeleuchtungszentrale mit den Leuchten zum Abfragen derer Adressdaten und in weiterer Folge zum Ansteuern derer Steuerstufen für eine Abgabe eines Blinkmusters vom Leuchtmittel der jeweiligen Leuchte verbunden, so kann nach einem Anlagenaufbau oder auch bei einer Erweiterung einer bestehenden Anlage eine vergleichsweise schnelle Inbetriebnahme ermöglicht werden. Die Notbeleuchtungszentrale kann nämlich selbst bei der Initialisierung alle Leuchten finden und mit diesen eine Datenverbindung zur Blinkmusterabgabe schaffen - eine manuelle Eingabe der Adressdaten ist daher nicht mehr notwendig. Außerdem können durch eine Abgabe des Blinkmusters vom Leuchtmittel der jeweiligen Leuchte Fehler an der Notbeleuchtung, am Leuchtmittel der Notbeleuchtung, an der Notbeleuchtungszentrale, am Datenbus und selbst Fehler beim Anlagenaufbau sofort über eine optische Kontrolle durch das Bedienpersonal erkannt werden, was eine einfach handhabbare Notbeleuchtungsanlage schaffen kann. Außerdem können durch diese einfache Initialisierung der Notbeleuchtungsanlage Fehler nahezu ausgeschlossen werden, sodass eine auch standfeste Notbeleuchtungsanlage geschaffen werden kann.

Die Notbeleuchtungsanlage kann konstruktiv vereinfacht werden, wenn die Notbeleuchtungszentrale mit den Leuchten zum Zuweisen von neuen Adressdaten, insbesondere von natürlichen Zahlen, verbunden ist und wenn die jeweilige Steuerstufe der Leuchten in Abhängigkeit der Wertigkeit der neuen Adressdaten des Adressspeichers die Leuchtmittel zur Abgabe des Blinkmusters ansteuert. Damit kann es möglich werden, dass der Leuchte bereits anhand deren Adressdaten über das abzugebende Blinkmuster Informationen vorliegen. Eine vergleichsweise aufwendige Datenkommunikation zur Übermittlung der unterschiedlichen Blinkmuster an die Leuchten kann so vermieden werden. Eine schnell initialisierbare Notbeleuchtungsanlage kann so geschaffen werden. Hinzu kommt, dass damit auch die Adressenvergabe der Notbeleuchtungszentrale auf einfache Weise mitüberprüft werden kann.

Um das Blinken der Leuchten auf konstruktiv einfache Weise zu synchronisieren, kann vorgesehen sein, dass die Notbeleuchtungszentrale mit der Datenverbindung zur Abgabe eines Taktsignals verbunden ist, wobei die Steuerstufen der Leuchten in Abhängigkeit des Taktsignals die Leuchtmittel zur Abgabe des Blinkmusters ein-und ausschalten. Zu diesem Zweck kann die Steuerstufe einen Schalter aufweisen, der die Leuchtmittel mit elektrischer Energie verbinden oder davon trennen kann.

In den Figuren ist beispielsweise der Erfindungsgegenstand anhand eines Ausführungsbeispiels dargestellt. Es zeigen
Fig. 1 eine schematische Ansicht auf eine Notbeleuchtungsanlage,
Fig. 2 eine vergrößerte Detailansicht auf eine Leuchte der Fig. 1
Fig. 3 eine vergrößerte Detailansicht auf die Notbeleuchtungszentrale der Fig. 1 und
Fig. 4 eine Darstellung zu einem Blinkmuster der Notbeleuchtungsanlage der Fig. 1.

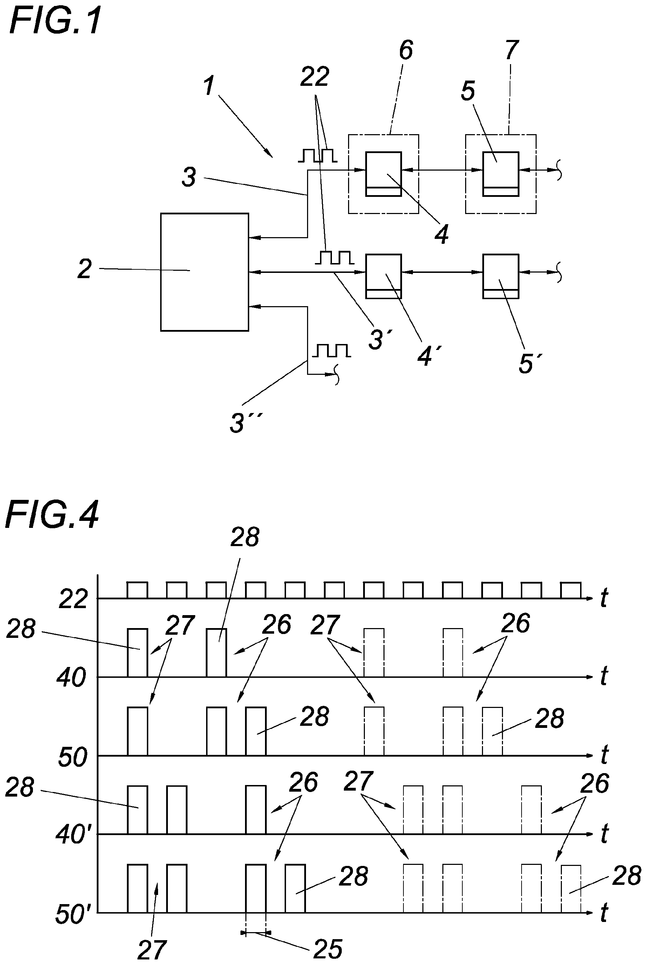

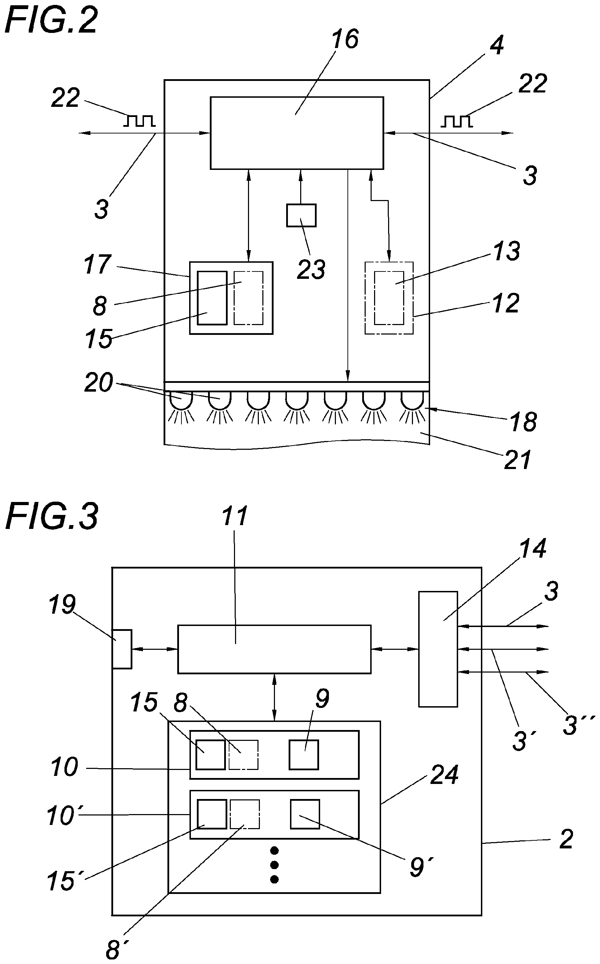

Die nach Fig. 1 beispielsweise dargestellte Notbeleuchtungsanlage 1 zeigt eine Notbeleuchtungszentrale 2, die über eine Datenverbindung 3 mit mehreren Leuchten 4 und 5 verbunden ist. Eine derartige Datenverbindung 3 kann ein Datenbus oder selbst die Versorgungsleitung der Leuchten 4 und 5 mit elektrischer Energie darstellen. Die Leuchten 4 und 5 sind örtlich verschieden gegenüber der Notbeleuchtungszentrale 2 und zwar an unterschiedlichen Anordnungsorten 6 und 7 vorgesehen. Zur Datenübertragung zwischen den Leuchten 4 und 5 und der Notbeleuchtungszentrale 2 werden Adressdaten 8 und 8' verwendet, was der Fig. 2 entnommen werden kann. Zur Durchführung der erfindungsgemäßen Initialisierung werden nun von der Notbeleuchtungszentrale 2 über die Datenverbindung 3 die Adressdaten 8, und 8' der Leuchten 4 und 5 ausgelesen, abgefragt bzw. gesucht. Zu diesem Zweck kann von der Notbeleuchtungszentrale 2 ein aus dem Stand der Technik bekannter Suchalgorithmus abgearbeitet werden, um die an die Datenverbindung 3 angeschlossenen Leuchten 4 und 5 zu finden. Über die Adressdaten 8 kann nun die Notbeleuchtungszentrale 2 die Leuchten 4 und 5 ansprechen, um diese in einem weiteren Schritt über die Datenverbindung 3 zur Abgabe von Blinkmustern 40, 50 ansteuern zu können. Die Blinkmuster 40, 50 unterscheiden sich in Abhängigkeit der jeweiligen Adressdaten 8 oder 8' der Leuchte 4 oder 5 voneinander, um damit nicht nur die Funktionalität der Datenverbindung 3 sondern auch die Eindeutigkeit der Adressdaten 8 und 8' und damit auch die Funktionstüchtigkeit der Leuchten 4 und 5 überprüfen zu können. Gleiche Adressdaten 8 und 8' führen nämlich auch zu gleichen Blinkmustern, was unmittelbar erkannt und somit auch die Gefahr eines Fehlers während der Initialisierung deutlich verringern kann. Dadurch, dass alle Leuchtmittel 18, die eine Beleuchtungsfunktion der Leuchte 4 oder 5 erfüllen, das Blinkmuster 40, 50 abgeben, können anhand des Blinkmusters 40, 50 auch gleichzeitig die Parameter aller Leuchtmittel 18 der Leuchten 4 oder 5 überprüft werden. Dies ist im Allgemeinen vorteilhaft, wenn lichtemittierende Dioden (LED) 20 zur Beleuchtung einer Hinweistafel 21 verwendet werden, die eine sicherheitstechnische Relevanz haben und daher sichergestellt werden muss, dass alle Leuchtmittel 18 deren zugeteilte Aufgabe zuverlässig erfüllen können. Die Leuchtmittel 18 können auch zum Beleuchten von Kennzeichen, Flucht- und/oder Rettungswegen vorgesehenen sein, was nicht näher dargestellt worden ist. Außerdem kann mit einem einzigen Überprüfungsschritt an den Leuchten 4 oder 5 das Initialisierungsverfahren deutlich schneller abgeschlossen und damit die Notbeleuchtungsanlage 1 vergleichsweise schnell in Betrieb genommen bzw. initialisiert werden. Außerdem sorgt dies für einfache Konstruktionsverhältnisse an den Leuchten 4 und 5, weil keine zusätzlichen Konstruktionsmaßnahmen zur Abgabe eines Blinkmusters notwendig sind.

Der Notbeleuchtungszentrale 2 werden zu jeder Leuchte 4 und 5 weiter auch Ortsdaten 9 bzw. 9' zugeordnet, damit der Notbeleuchtungszentrale 2 auch der Anordnungsort 6 bzw. 7 der jeweiligen Leuchte 4 bzw. 5 bekannt ist. Diese Daten, nämlich die Adressdaten 8, 8' und Ortsdaten 9, 9' der jeweiligen Leuchte 4 bzw. 5 werden in einem Datenpaket 10 gespeichert und in einem Speicher 24 der Notbeleuchtungszentrale 2 abgelegt, wobei beim Zuordnen von Ortsdaten 9 besondere Verfahrensverhältnisse genutzt werden können. Und zwar können bei der Überprüfung des Blinkmusters 40, 50 der Leuchten 4 und 5 auf einfache Weise auch diese Ortsdaten 9 und 9' aufgeschrieben werden. In Abhängigkeit des Blinkmusters 40 bzw. 50 können dann in weiterer Folge die in der Notbeleuchtungszentrale 2 abgespeicherten Datenpakete 10, 10', die bereits die Adressdaten 8, 8' aufweisen, mit den jeweiligen Ortsdaten 9, 9' ergänzt werden.

Um den Leuchten 4 und 5 einfach ein Blinkmuster 40, 50 vorzugeben, kann vorgesehen sein, dass die Recheneinheit 11 der Notbeleuchtungszentrale 2 Blinkmusterdaten 12 im Speicher 13 der Leuchte 4 ablegt, was strichpunktiert dargestellt worden ist. Zu diesem Zweck kann die Recheneinheit 11 über eine Schnittstelle 14 mit dem Speicher 13 der Leuchte 4 verbinden, um im Speicher 13 der Leuchte 4 Blinkmusterdaten 12 einzuschreiben.

Konstruktiv einfach werden jedoch die ausgelesenen und werkseitig gespeicherten Adressdaten 8 der Leuchte 4 bzw. 5 durch neue Adressdaten 15 bzw. 15', insbesondere durch natürliche Zahlen, ersetzt. Es kann daher auf HEX Codes als Adressdaten 8 verzichtet werden, was für das Bedienpersonal eine erhebliche Handhabungserleichterung bedeutet. Anhand der neuen und vergleichsweise einfachen Adressdaten 15 kann nun die Leuchte 4 ein Blinkmuster 40 erzeugen, weil dieses Blinkmuster 40 in Abhängigkeit der Wertigkeit der Adressdaten erstellt werden kann. Zu diesem Zweck muss lediglich die Steuerstufe 16 die neuen Adressdaten 15 aus dem Speicher 17 auslesen und die Leuchtmittel 18 dementsprechend ein- und ausschalten, um so das vorteilhafte Blinkmuster 40, 50 zur Initialisierung der Notbeleuchtungsanlage 1 erzeugen zu können.

Dem Bedienpersonal ist es durch das Blinkmuster 40, 50 auf einfache Weise möglich, den Leuchten 4 und 5 auch Ortsdaten 9 bzw. 9' zuordnen zu können, wenn diese am Anordnungsort 6 bzw. 7 die aufzunehmenden Ortsdaten 9 bzw. 9' erfassen. Diese Ortsdaten 9 bzw. 9' können dann auf einfache Weise bei der Notbeleuchtungszentrale 2 eingegeben werden, beispielsweise über eine Schnittstelle 19. Der Notbeleuchtungszentrale 2 werden dann zu den jeweiligen Leuchten 4 und 5 in Abhängigkeit der Blinkmuster 40, 50 Ortsdaten 9 bzw. 9' zugeordnet.

An die Notbeleuchtungszentrale 2 sind außerdem drei parallele Datenverbindungen 3, 3' und 3" für Leuchten 4 und 5 bzw. 4' und 5' etc. vorgesehen. Vereinfachte Verfahrensbedingungen für das Bedienpersonal ergeben sich, wenn die an einer gemeinsamen Datenverbindung 3 bzw. 3' etc. angeschossenen Leuchten 4, 5 bzw. 4', 5' etc. teilweise ein gleiches Blinkmuster 40, 50, 40', 50' abgeben, weil damit der jeweilige Strang 3, 3' und 3" eindeutig erkennbar wird.

Zur Synchronisierung der Leuchten 4 und 5 bei der Abgabe derer Blinkmuster gibt die Notbeleuchtungszentrale 2 über die Datenverbindungen 3, 3' und 3" den Leuchten 4 und 5 ein Taktsignal 22 vor. Die Takte des Taktsignals 22 werden von der Vergleichsstufe 23 mitgezählt. Solange der Zählerstand der Vergleichsstufe 23 kleiner der Wertigkeit der Adressdaten 8 ist, wird mit dem Taktsignal 22 das Leuchtmittel 18 zur Abgabe eines Blinksignals 28 ein- und ausgeschaltet. Damit kann auf konstruktiv einfache Weise ein Blinkmuster 40, 50 erzeugt werden.

Im Allgemeinen sind jegliche Arten von optisch für ein Bedienpersonal erkennbare Blinkmuster vorstellbar, wobei eine Blinkmusterart 40, 50 beispielsweise nach Fig. 4 dargestellt worden ist. Insbesondere hat sich ein Blinkmuster 40, 50 als vorteilhaft herausgestellt, das für alle Leuchten 4, 5 zeitlich gleich lange Hellzeiten 25 (Einschaltzeiten) für das Blinksignal 28 aufweist. Auf Basis der Anzahl optisch für das Bedienpersonal sichtbaren Blinksignalen 28 der jeweiligen Blinkmuster 40, 50 sind die Leuchten 4, 5 eindeutig voneinander zu unterscheiden bzw. wird eine einfache und schnelle Funktionsüberprüfung der Notbeleuchtungsanlage 1 ermöglicht. So ist der Fig. 4 beispielsweise zu entnehmen, dass die Leuchte 4 einmal und die Leuchte 5 zweimal blinkt, was als Leuchtmuster 26 einen Teil des Blinkmusters 40, 50 darstellt. Alle Leuchtmittel 18 der Leuchten 4, 5 schalten daher optisch für das Bedienpersonal sichtbar ein und aus und erzeugen so ein Blinkmuster.

Vorteilhaft unterscheiden sich die Blinkmuster 40, 50, 40', 50' der Leuchten 4, 5, 4', 5' zusätzlich durch ein Datenverbindungsmuster 27 voneinander, wie dies insbesondere in einem Vergleich der Blinkmuster 40, 50 gegenüber den Blinkmustern 40' und 50' erkannt werden kann. So wird für die Leuchten 4 und 5 an der Datenverbindung 3 lediglich einmal geblinkt, um diesen Leuchten 4 und 5 ein Datenverbindungsmuster 27 zuzuordnen, wohingegen für die Leuchten 4' und 5' zweimal geblinkt wird, um gegenüber dem Datenverbindungsmuster 27 der Leuchten 4 und 5 ein unterschiedliches Datenverbindungsmuster 27 zu schaffen. Dadurch kann auf einfache Weise mit einem gleichen Blinkmuster zu Beginn auf jene Leuchten 4, 5 bzw. 4', 5' hingewiesen werden, die an einer gleichen Datenverbindung 3, 3', 3" angeschlossen sind.

Die Leuchtmuster 26 zur Unterscheidung der Leuchten 4, 5 an einer gemeinsamen Datenverbindung 3, 3' bzw. 3" schließen an das Datenverbindungsmuster 27 zur Unterscheidung der Datenverbindungen 3, 3' und 3" an. Als Pause zwischen den Mustern 26 und 27 wird ein Takt des Taktsignals 22 samt 2 Pausen bzw. Dunkelzeiten gewählt. Die Blinkmuster 40, 50, 40', 50' können sich mehrmals wiederholen, wie dies in der Fig. 4 strichpunktiert anhand einer Wiederholung angedeutet worden ist.

Vorteilhaft synchronisiert sich der Start des Blinksignals 28 aller Blinkmuster 40, 50, 40', 50' an der aufsteigenden Flanke des Taktsignals 22. Das Ende des Blinksignals 28 muss der Taktlänge bzw. der abfallenden Flanke des Taktsignals 22 nicht zwangsweise folgen - vorzugsweise ist jedoch das Ende des Blinksignals 28 mit der abfallenden Flanke des Taktsignals 22 synchronisiert.

## Patentansprüche

1. Verfahren zur Initialisierung einer Notbeleuchtungsanlage (1) mit einer Notbeleuchtungszentrale (2) und mit mindestens zwei mit der Notbeleuchtungszentrale (2) über eine Datenverbindung (3) verbundenen Leuchten (4, 5), insbesondere Not- und/oder Sicherheitsleuchten, die Leuchtmittel (18), insbesondere Leuchtdioden (20), zum Beleuchten von Kennzeichen, Flucht- und/oder Rettungswegen aufweisen,
wobei in der Notbeleuchtungszentrale (2) Datenpakete (10, 10') abgespeichert sind, die Adressdaten (8, 8' bzw. 15, 15') der mindestens zwei Leuchten (4, 5) aufweisen, bei welchem Verfahren zur Datenübertragung über die Datenverbindung (3) die Adressdaten der mindestens zwei Leuchten (4, 5) verwendet werden und die mindestens zwei Leuchten (4, 5) Blinkmuster (40, 50) in Abhängigkeit der jeweiligen Adressdaten (8, 8') der mindestens zwei Leuchten (4, 5) über die jeweiligen Leuchtmittel (18) abgeben, welche Blinkmuster (40, 50) sich in Abhängigkeit der jeweiligen Adressdaten (8, 8') der mindestens zwei Leuchten (4, 5) voneinander unterscheiden,
**dadurch gekennzeichnet, dass**
die Notbeleuchtungszentrale (2) über die Datenverbindung (3) die Adressdaten (8, 8') der mindestens zwei Leuchten (4, 5) in einem ersten Schritt abfragt und in einem zweiten Schritt die jeweiligen Leuchtmittel (18) der mindestens zwei Leuchten (4, 5) über die Datenverbindung (3) zur Abgabe von den Blinkmustern (40, 50) ansteuert, wobei in einem dritten Schritt jedem Blinkmuster (40, 50) der mindestens zwei Leuchten (4, 5) Ortsdaten (9, 9') zum Anordnungsort (6, 7) der jeweiligen Leuchte (4, 5) dieser mindestens zwei Leuchten (4, 5) vom Bedienpersonal zugeordnet werden und in einem vierten Schritt in Abhängigkeit des jeweiligen Blinkmusters (40, 50) die Datenpakete (10, 10') mit den jeweiligen Ortsdaten (9, 9') vom Bedienpersonal ergänzt werden.

2. Verfahren nach Anspruch 1, **dadurch gekennzeichnet, dass** die Notbeleuchtungszentrale (2) in einem weiteren Schritt nach dem ersten Schritt und vor dem zweiten Schritt den mindestens zwei Leuchten (4, 5) neue Adressdaten (15, 15'), insbesondere durch natürliche Zahlen, zuweist, wobei die mindestens zwei Leuchten (4, 5) in Abhängigkeit der Wertigkeit ihrer neuen Adressdaten (15, 15') das Blinkmuster (40, 50) erzeugen.

3. Verfahren nach Anspruch 1 oder 2, **dadurch gekennzeichnet, dass** die Notbeleuchtungszentrale (2) über die Datenverbindung (3, 3', 3") den mindestens zwei Leuchten (4, 5 bzw. 4', 5') ein Taktsignal (22) zu Abgabe deren Blinkmuster (40, 50) vorgibt.

4. Verfahren nach einem der Ansprüche 1 bis 3, **dadurch gekennzeichnet, dass** jedes Blinkmuster (40, 50 bzw. 40', 50') ein Datenverbindungsmuster (27) aufweist, und dass wenigstens eine weitere zweite parallele Datenverbindung (3, 3', 3") für Leuchten (4, 5 bzw. 4', 5') vorgesehen ist, wobei mindestens zwei Leuchten (4, 5 bzw. 4', 5') jeweils über eine Datenverbindung (3 bzw. 3' bzw. 3") der wenigstens zwei parallelen Datenverbindungen (3, 3', 3") mit der Notbeleuchtungszentrale (2) verbundenen sind, wobei die jeweils von den an einer gemeinsamen Datenverbindung (3, 3', 3") angeschossenen Leuchten (4, 5 bzw. 4', 5') abgegebenen Blinkmuster (40, 50 bzw. 40', 50') teilweise in dem Datenverbindungsmuster (27) gleich sind.

## Claims

1. Method for initializing an emergency lighting system (1) having an emergency lighting control center (2) and having at least two lights (4, 5), in particular emergency and/or safety lights, which are connected to the emergency lighting control center (2) via a data connection (3) and which have lighting means (18), in particular light-emitting diodes (20), for illuminating license plates, escape and/or rescue routes, wherein data packets (10, 10') which comprise address data (8, 8' or 15, 15') of the at least two lights (4, 5) are stored in the emergency lighting control center (2), in which method for data transmission via the data connection (3) the address data of the at least two lights (4, 5) are used and the at least two lights (4, 5) emit flashing patterns (40, 50) depending on the respective address data (8, 8') of the at least two lights (4, 5) via the respective lighting means (18), which flashing patterns (40, 50) differ from one another depending on the respective address data (8, 8') of the at least two lights (4, 5), **characterized in that** the emergency lighting center (2) interrogates the address data (8, 8') of the at least two lights (4, 5) in a first step via the data connection (3) and, in a second step, controls the respective lighting means (18) of the at least two lights (4, 5) via the data connection (3) to output the flashing patterns (40, 50), wherein, in a third step, each flashing pattern (40, 50) of the at least two lights (4, 5) are assigned location data (9, 9') for the location of arrangement (6, 7) of the respective light (4, 5) of these at least two lights (4, 5) by the operating personnel, and, in a fourth step, the data packets (10, 10') are supplemented with the respective location data (9, 9') by the operating personnel depending on the respective flashing pattern (40, 50).

2. Method according to claim 1, **characterized in that** in a further step after the first step and before the second step, the emergency lighting control center (2) assigns new address data (15, 15'), in particular by natural numbers, to the at least two lights (4, 5), wherein the at least two lights (4, 5) generate the flashing pattern (40, 50) depending on the valency of their new address data (15, 15').

3. Method according to claim 1 or 2, **characterized in that** the emergency lighting control center (2) provides the at least two lights (4, 5 or 4', 5') via the data connection (3, 3', 3") with a clock signal (22) for outputting their flashing patterns (40, 50).

4. Method according to one of claims 1 to 3, **characterized in that** each flashing pattern (40, 50 or 40', 50') has a data connection pattern (27), and **in that** at least one further second parallel data connection (3, 3', 3") is provided for lights (4, 5 or 4', 5'), wherein at least two lights (4, 5 or 4', 5') are each connected via a data connection (3 or 3' or 3") of the at least two parallel data connections (3, 3', 3") to the emergency lighting control center (2), wherein the flashing patterns (40, 50 or 40', 50') emitted in each case by the lights (4, 5 or 4', 5') connected to a common data connection (3, 3', 3") are partially identical in the data connection pattern (27).

## Revendications

1. Procédé d'initialisation d'une installation d'éclairage de secours (1) avec une centrale d'éclairage de secours (2) et avec au moins deux luminaires (4, 5), en particulier des luminaires de secours et/ou de sécurité, qui sont reliés à la centrale d'éclairage de secours (2) par une liaison de données (3) et qui présentent des moyens lumineux (18), en particulier des diodes électroluminescentes (20), pour l'éclairage d'indications, de voies de secours et/ou d'évacuation, dans lequel des paquets de données (10, 10') sont enregistrés dans la centrale d'éclairage de secours (2), lesquels contiennent des données d'adresse (8, 8', respectivement 15, 15') desdits au moins deux luminaires (4, 5), dans lequel procédé les données d'adresse desdits au moins deux luminaires (4, 5) sont utilisées pour la transmission de données via la liaison de données (3) et lesdits au moins deux luminaires (4, 5) émettent des séquences de clignotement (40, 50) en fonction des données d'adresse respectives (8, 8') desdits au moins deux luminaires (4, 5) par l'intermédiaire des moyens lumineux respectifs (18), lesquelles séquences de clignotement (40, 50) diffèrent les unes des autres en fonction des données d'adresse respectives (8, 8') desdits au moins deux luminaires (4, 5), **caractérisé en ce que** la centrale d'éclairage de secours (2) interroge les données d'adresse (8, 8') desdits au moins deux luminaires (4, 5) via la liaison de données (3) dans une première étape, et, dans une deuxième étape, commande les moyens lumineux respectifs (18) desdits au moins deux luminaires (4, 5) via la liaison de données (3) pour émettre les séquences de clignotement (40, 50), dans lequel, dans une troisième étape, chaque séquence de clignotement (40, 50) desdits au moins deux luminaires (4, 5) est associée par le personnel d'exploitation à des données de localisation (9, 9') sur le lieu d'implantation (6, 7) du luminaire respectif (4, 5) desdits au moins deux luminaires (4, 5) et, dans une quatrième étape, en fonction de la séquence de clignotement respective (40, 50), les paquets de données (10, 10') sont complétés par les données de localisation respectives (9, 9') du personnel d'exploitation.

2. Procédé selon la revendication 1, **caractérisé en ce que**, dans une étape supplémentaire après la première étape et avant la deuxième étape, la centrale d'éclairage de secours (2) attribue de nouvelles données d'adresse (15, 15'), en particulier par des nombres naturels, auxdits au moins deux luminaires (4, 5), lesdits au moins deux luminaires (4, 5) générant la séquence de clignotement (40, 50) en fonction de la valeur de leurs nouvelles données d'adresse (15, 15').

3. Procédé selon la revendication 1 ou 2, **caractérisé en ce que** la centrale d'éclairage de secours (2) fournit auxdits au moins deux luminaires (4, 5, respectivement 4', 5') via la liaison de données (3, 3', 3") un signal d'horloge (22) pour l'émission de leur séquence de clignotement (40, 50).

4. Procédé selon l'une des revendications 1 à 3, **caractérisé en ce que** chaque séquence de clignotement (40, 50, respectivement 40', 50') présente une séquence de liaison de données (27), et qu'il est prévu au moins une deuxième liaison de données parallèle supplémentaire (3, 3', 3") pour des luminaires (4, 5, respectivement 4', 5'), au moins deux luminaires (4, 5, respectivement 4', 5') étant chaque fois reliés à la centrale d'éclairage de secours (2) via une liaison de données (3, respectivement 3', respectivement 3") desdites au moins deux liaisons de données parallèles (3, 3', 3"), les séquences de clignotement respectives (40, 50, respectivement 40', 50') émises par les luminaires (4, 5, respectivement 4', 5') connectés à une liaison de données commune (3, 3', 3") étant partiellement identiques dans la séquence de liaison de données (27).
